(19) Europäisches Patentamt
European Patent Office
Office européen des brevets

(11) Publication number: 0 309 229 A2

(12) # EUROPEAN PATENT APPLICATION

(21) Application number: 88308765.2

(22) Date of filing: 21.09.88

(51) Int. Cl.4: D 01 F 6/60
C 08 J 5/18, C 08 G 69/32

(30) Priority: 22.09.87 US 99751

(43) Date of publication of application:
29.03.89 Bulletin 89/13

(84) Designated Contracting States: DE FR GB

(71) Applicant: E.I. DU PONT DE NEMOURS AND COMPANY
1007 Market Street
Wilmington Delaware 19898 (US)

(72) Inventor: Burch, Robert Ray
611 Brecknock Drive
Exton Pennsylvania 19341 (US)

Schmidt, Hans-Werner
Holzstrasse 18
D-6500 Mainz (DE)

(74) Representative: Myerscough, Philip Boyd et al
J.A.Kemp & Co. 14, South Square Gray's Inn
London, WC1R 5EU (GB)

(54) **Preparation of articles of manufacture from isotropic and anisotropic polyamide anion solutions.**

(57) Solutions of aromatic polyamide anion salts in liquid sulfoxides; including anisotropic solutions and isotropic solutions comprising the potassium salt of the polyamide anion, find use in the preparation of shaped articles of manufacture such as fibers, films and coatings. There is also provided a method for regulating solution viscosity by control of the degree to which the aromatic polyamides are deprotonated.

EP 0 309 229 A2

**Description**

# PREPARATION OF ARTICLES OF MANUFACTURE FROM ISOTROPIC AND ANISOTROPIC POLYAMIDE ANION SOLUTIONS

## Background of the Invention

### Field of the Invention

This invention concerns the preparation of articles of manufacture from isotropic and anisotropic aromatic polyamide anion solutions and articles of manufacture made therefrom.

### State of the Art

It is known that sodium hydride reacts with dimethylsulfoxide under anhydrous conditions with evolution of hydrogen to provide the so-called "dimsyl" anion. The dimsyl anion can be used to remove protons from a variety of compoundes such as amines, amides, acetylenes and weakly acid hydrocarbons. Typical reactions have been described by Corey et al., J. Am. Chem. Soc., 87, 1345 to 1353, 1965, among others. Takayanagi et al. have extended the reaction of the dimsyl anion with amides to relatively low molecular weight aromatic polyamides and have used the amide anion thus formed to produce a variety of N-substituted products. See, for instance, J. Poly. Sci. (Polymer Chemistry Edition) 19, 1133 to 1145 (1981). However, this earlier work shows no recognition of solution anisotropy and there is nothing to suggest the preparation of useful articles such as films, fibers, coatings and coated substrates from dimethylsulfoxide or other liquid sulfoxide solutions of aromatic polyamides. Such solutions, both isotropic and anisotropic, over a wide range of concentrations, have now been found to be an excellent resource from which to prepare useful articles.

Other background publications include:
Takayanagi et al., Journal of Polymer Science, Polymer Chemistry Edition, Vol. 21, 31 to 39 (1983);
Ogata et al., Journal of Polymer Science, Polymer Chemistry Edition, Vol. 22, 865 to 867 (1984);
Takayanagi et al., Journal of Applied Polymer Science, Vol. 29, 141 to 151 (1984);
Takayanagi et al., J. Macromol. Sci.-Phys., B17(4), 591 to 615 (1980);
Takayanagi et al., Journal of Applied Polymer Science, Vol. 29, 2057 to 2067 (1984) and 2547 to 2559, and Vol. 27, 3903 to 3917 (1982);
Bodaghi et al., Polymer Engineering and Science, 24, 242 to 251 (1984);
Takayanagi, Pure and Appl. Chem., 55, 816 to 832 (1983);
Moore and Mathias, in J. of Applied Polymer Science, 32, 6299 to 6315 (1986);
Takayanagi and Katayose, in J. Polym. Sci., Polym. Chem. Ed.,19, 1133 to 1145 (1981);
Japanese Patent Publications 58/7426, 59/223752 and 57/195136; U.S. Patent No. 4,228,218; Yamada et al., J. Appl. Polym. Sci.,32, 5231 (1986); Flood et al., J. Appl. Polym. Sci., 27, 2965 (1982); and Aoki et al., Polymer Engineering and Science, 20, 221 (1980).

Aromatic polyamides are known to be soluble in sulfuric acid and hydrogen fluoride. However, the corrosivity of such solvents together with other factors attendant upon their use have combined to limit somewhat the development of commercial uses for the aromatic polyamides. With solvent systems such as amide-salt combinations, e.g., dimethylacetamide/lithium chloride, high salt levels are necessary to achieve concentrated polymer solutions. This, in turn, may affect utilization of these solutions for certain applications.

## Summary of the Invention

This invention relates to a process for preparing shaped articles of manufacture such as fibers, films and coatings from aromatic polyamide polymers in liquid sulfoxides. This invention also relates to anisotropic solutions of aromatic polyamide anions useful for the preparation of shaped articles having anisotropic properties, and to isotropic solutions comprising the potassium salt of the polyamide anion. Isotropic solutions containing a potassium cation have been found to exhibit unexpectedly lower solution viscosities for any given molecular weight than the corresponding sodium salt.

The polymers are dissolved in sulfoxide which has been contacted with a base such as a metal hydride to effect its anionization. The sulfoxide in anionic form acts to remove a proton from the polymer and to form stable polymer solutions of the resulting anionic form of the polymer. For the sake of simplicity, the polymer solutions may be spoken of as solutions in a liquid sulfoxide, it being understood that they comprise anionic polymer in a sulfoxide from which a hydrogen ion has been removed, preferably, by reaction with sodium or potassium hydride. Cations other than sodium and potassium may be present as well.

An additional aspect of this invention springs from the discovery that solution viscosity is a function of the degree to which the aromatic polyamide is deprotonated. Viscosity is highest when the polymer is fully deprotonated and becomes lower as reprotonation occurs, recognizing that the polyamides will become insoluble at high levels of reprotonation. Correlation will vary between the particular polyamide in solution and

the precise effect on viscosity of a certain level of protonation. Nevertheless, as will be seen representatively in the Table following the Examples, viscosity does decrease as the level of reprotonation increases.

In the same way, an increase in the level of reprotonation of the polymer solution will cause a decrease in solution viscosity. It is well known that solution viscosity affects ease of fiber formation and influences fiber properties. Film formation also is dependent on polymer viscosity. Importance of the control that can now be maintained through this technique of deprotonation/reprotonation (control of degree of protonation) will be very evident to anyone skilled in this art.

Actual methods to control the level of protonation and, hence, viscosity may vary. This invention contemplates a number of methods to effect this control including: (i) controlling the viscosity of the solution by mixing deprotonated polymer with sufficient protonated polymer to achieve the desired viscosity, (ii) lowering the viscosity of a solution comprising partially or fully deprotonated polymer, by adding thereto an acid having a lower pKa than that of the polymer, and (iii) raising the viscosity of a solution containing partially or fully protonated polymer by adding thereto controllable amounts of a base whose conjugate acid has a higher pKa than that of the polymer.

Contemplated acids that can be employed to lower viscosity according to step (ii) include: acetic, sulfuric, nitric, phosphoric, hydrochloric, hydrobromic, and the like. Contemplated bases for use according to step (iii) include alkali metal hydrides and similar strongly basic materials.

Contemplated polyamides have the following repeating unit:

-NHRCO-, 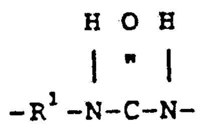 or

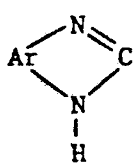

wherein:

R is selected from $R^3$ and $R^1NHCOR^2$,

$R^1$ and $R^3$m, individually, are selected from m-phenylene, p-phenylene, 3,3′-biphenylene, 3,4′-biphenylene, 4,4′-biphenylene and 4,4′-diphenylene ether,

$R^2$ is selected from $R^1$ and $-(CH_2)_x-$,

Ar is an aryltriyl radical in which two of the three radical bonds are adjacent to one another and attached to nitrogen atoms, and

x is 1 to 10, preferably 1 to 4.

The repeating unit as described can be substituted with one or more additional substituents that do not interfere with solution formation as described herein. Preferred among these optional substituents are halogen, most preferably chlorine and bromine, and $C_xH_{2x+1}$ wherein x is 1 to 10. Representative of contemplated aryltriyl radicals (Ar) is 1,2,4-benzenetriyl.

When the polymer comprises repeating units of $R^3$ solely, it can be characterized as a homopolymer. Homopolymers are also formed when $R^1$ and $R^2$ are the same throughout the polymer. Copolymers result when $R^1$ and/or $R^2$ vary within the polymer matrix. It is also contemplated that relatively minor amounts of aliphatic components can be present with the aromatic moieties so long as they do not adversely affect solution stability or film-formability.

This invention also relates to articles of manufacture made from the polymer solutions of this invention and to a method for making such articles by removing the polymer from solution, e.g., by precipitation, by addition of acid, by addition of a nonsolvent, or by concentrating the solution to solidify the polymer, then converting the polymer to a formable mass and shaping it to the desired geometry. The articles are characterized by physical and chemical profiles reflective of the novel polymer solutions from which they are made. In addition, it has been found that polymers in which $R^1$ and $R^3$ are p-phenylene form anisotropic solutions and articles made from such solutions display anisotropic properties.

## Details of the Invention

The Polymers

Contemplated polymers include aromatic polyamides containing the -NH- function as part of the polymer unit. Useful aromatic polyamides are described in U.S. 3,869,429 and U.S. 4,075,172. Polymers should have at least a film-forming molecular weight, preferably a weight average molecular weight of about 2500 or more. Preferred molecular weights are about 3300 or more, indicated by an inherent viscosity of about 0.4 or greater measured at 0.5% concentration in concentrated (95% to 98%) sulfuric acid at 30° C. Contemplated polymers include poly(paraphenylene terephthalamide), poly(metaphenylene isophthalamide), poly(parabenzamide), poly(4,4′-biphenylene isophthalamide), poly(chloroparaphenylene isophthalamide) and copolymers thereof. The polymers contemplated for use in this invention are soluble only with great difficulty in typical solvent systems known heretofore.

The Solvent System and Solutions

Liquid sulfoxides that are useful as solvents in the practice of this invention include the following:

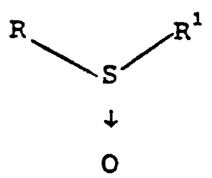

wherein R and $R^1$, which can be the same or different, are alkyl of three or fewer carbon atoms, and can be combined with the sulfoxide group to form a cyclo aliphatic ring. Preferred are dimethylsulfoxide (DMSO) and tetrahydrothiophene oxide (THTO). Minor amounts of other organic co-solvents, such as DMF, in proportions which do not precipitate the polymer anion, can also be employed.

The aromatic polyamides are converted to homogeneous solutions of the corresponding anion in the sulfoxide by reacting them with the sulfoxide carbanion. The carbanion can be formed by combining a metal hydride with the sulfoxide at a temperature of about 25° to 80° C. Suspensions of metal hydrides in mineral oil can be used but, for best results, the mineral oil should be removed prior to reaction with the sulfoxide.

The polyamide solutions are generally prepared with a solids content of about 1.5 to 1.7 weight percent. Solutions with a higher polymer content, up to 12 weight percent and more, can be obtained for example by evaporating the solvent in vacuum or freeze drying. Solutions with a higher polymer content can also be obtained by preparing a solution in which the polyanion is only partially deprotonated. The solutions can be purified by filtering and the concentration can be determined by reprecipitation.

To prepare solutions of polymer, it is necessary only to contact the polymer with the components which form the solvent system. The order of addition is not critical although the solvent system is usually made up before immersion of the polymer to be dissolved. It would be acceptable, however, to disperse the polymer to be dissolved in the sulfoxide solvent component and then add to that dispersion the metal hydride component.

The solutions are preferably prepared at temperatures less than 50° C since prolonged exposure at higher temperatures may result in reduction in molecular weight. The degree of degradation, of course, depends on polymer structure. Little degradation of poly(paraphenylene terephthalamide) anion solutions occurs on prolonged storage at ambient temperatures.

The amount of polymer which can be dissolved by the instant solvent system is a function of ability to handle the generated solution viscosity. In this regard, extended chain polymers, such as poly(paraphenylene terephthalamide) provide higher solution viscosities at equivalent concentrations and molecular weights vs. flexible chain polymers, such as poly(metaphenylene isophthalamide). Concentrations of polymer attainable in the solutions will vary with the polymer structure, with the degree of deprotonation and with molecular weight as determined by inherent viscosity.

It has been found that anisotropic polymer solutions can be formed from the more extended chain polymers, such as poly(paraphenylene terephthalamide) at varying concentrations of polymer in solution, depending in large measure on the identity of the counter cation. In this regard, see Table 1 hereafter.

Articles of Manufacture

One skilled in the art will be able to fabricate a wide range of useful articles from the solutions of this invention, including films, fibers, coatings, coated and encapsulated materials and the like. With respect to films, their preparation from the instant solutions will insure excellent physical and chemical properties. Such as properties include low salt content, good temperature stability and uniformity.

Films have been prepared from isotropic and anisotropic polyamide anion solutions. Films, from isotropic solutions having balanced properties in all directions, can be prepared by standard solution casting techniques at about 25° to 70° C. Selected coating temperatures are dependent, among other things, on the viscosity of the solution. Depending on the treatment of the cast solutions, films of either polyamide or polyamide anion can be prepared as follows.

(i) quenching in protic solvent produces polyamide film;

(ii) quenching in non-protic solvent produces polyamide anion film;
(iii) evaporation of the sulfoxide produces polyamide anion film; and
(iv) polyamide anion film contacted with a protic solvent will produce a polyamide film.

Very good polyamide films have been prepared according to method (i) by quenching the cast solutions into a coagulation bath of water with traces of sulfuric acid. The remaining solvent and salt was completely removed from the film by several washings with water. The films were put on frames and dried at room temperature. During this drying operation, the films shrunk and developed strong tension. The final drying was accomplished at about 130°C overnight or in vacuum at temperatures up to about 180°C. The resulting films were thin, clear, uniform and visually without defects.

Coagulation of cast solutions of polyamide anion/sulfoxide into dry acetone, according to method (ii), resulted in the formation of polyamide anion films that were then dried at 130°C in the absence of moisture. Evaporation of sulfoxide at 100°C for about 20 to 30 minutes and drying at 130°C resulting in polyamide anion films according to method (iii). The major difficulty associated with this latter procedure is that any remaining solvent has a detrimental effect on the properties of the produced films. The polyamide anion films are converted with water, according to method (iv), to polyamide films within seconds.

Polyamide anion/sulfoxide solutions can also be used as dopes for fiber spinning. Fibers were prepared by a dry spinning process and by a dry jet -wet spinning process. Anisotropic solutions of polyamide anion are preferably used as dopes for fibers. The temperature of the spin dope was 70° to 75°C and the size of the nozzle was 5 mil. Water and methanol were used as coagulants. The fibers were washed with water for 24 hours and dried for several hours at room temperature. Final drying was done in an air oven at 120°C. The denier of the fibers was approximately 7.

Coagulation into acetone resulted in the preparation of a polyamide anion fiber. The fiber was dried at 120°C. The denier was approximately 7. Washing with water will convert the polyamide anion fiber to polyamide fiber within seconds.

Dry spinning of the polyamide anion was done with a solution having a solids content of approximately 10 weight percent. The column temperature for the evaporation of the solvent was 240°C. A colored polyamide anion fiber was collected. The as-spun fibers contained dimethylsulfoxide which was almost completely removed by drying the fibers at higher temperatures. A part of the as-spun fibers was placed into water and converted to polyamide fibers within seconds. The polyamide fibers were dried at 120°C.

Polyamide anion/sulfoxide solutions can also be used for the preparation of polymer coatings. The advantage in using these solutions for coatings is the noncorrosive solvent. This makes possible the coating and encapulating of a variety of substrates normally attacked by sulfuric acid or HF.

Articles made from the isotropic and anisotropic solutions of this invention have several distinguishing characteristics, including the following: good homogeneity, and good color and thermal and mechanical properties. It has been found that films cast from sulfoxide solutions of poly(para-phenylene terephthalamide) have uniplanar orientation in which the chain axis lies in the plane of the film and the crystallographic b axis, the hydrogen-bonding direction, lies normal to the plane. In one instance, the crystallite sizes along the chain axis and in the hydrogen-bonding direction were about 35°A and 12°A respectively. Solvent molecules hydrogen-bonded to the amide groups may have affected crystallite growth in the hydrogen-bonding direction.

The following Examples illustrate the invention. The weight average molecular weight of the polymer used in the Examples was about 3,300.

## EXAMPLE 1

### Preparation of Poly(p-phenylene terephthalamide)$^-Na^+$

Sodium hydride 1.25g, 97% purity) ($5.04 \times 10^{-2}$ mol) was weighed in a dry box and transferred to a one-liter three-neck flask equipped with a mechanical stirrer, condenser and nitrogen inlet tube. Dimethylsulfoxide 400 ml, was added by syringe and the reaction was heated at 80°C for one hour in an oil bath until hydrogen bubbles were no longer visible. Polymer pulp, 6g ($5.04 \times 10^{-2}$ mol amide groups) was added through a powder funnel after the reaction had cooled somewhat. Stirring the solution overnight at room temperature resulted in the dissolution of all polymer.

## EXAMPLES 2 AND 3

The solution of Example 1 was cast on a glass slide and quenched in a coagulation bath of water/sulfuric acid. The film was dried at 130°C under tension. The film properties (thickness: 0.00025 inch, density: 1.365 g/cc) were:

| | Machine Direction | Transverse Direction |
|---|---|---|
| Tensile Modulus: | 720 to 800 kpsi | 760to 820 kpsi |
| Tensile Strength: | 19 to 24 kpsi | 21 to 24 kpsi |
| Elongation at Break: | 5.2 to 6.7% | 4.4 to 6.6% |
| Elmendorf Tear: | 7.0 g/mil | 6.7 g/mil |

## EXAMPLE 4

Preparation of Poly(p-phenylene terephthalamide)$^-K^+$

Potassium hydride (35% suspension in mineral oil), 5.77g, was weighed directly into a one-liter three-necked flask where it was washed four times with about 25 ml of dry hexane to remove the mineral oil. After each addition of hexane, the flask was swirled and the potassium hydride allowed to settle before the hexane mineral oil layer was suctioned off with a filter stick. The flask was maintained under nitrogen flow throughout this procedure. The potassium hydride powder was dried by passing a nitrogen stream through the flask. Dry dimethylsulfoxide, 400 ml, was added by syringe at room temperature, washing potassium hydride off the frit. Reaction of potassium hydride with dimethylsulfoxide was immediate. The filter stick was replaced with a mechanical stirrer. The reaction mixture was stirred for thirty minutes until no more hydrogen bubbling was observed. Dry polymer pulp (6g) was added through a powder funnel while stirring at room temperature until a clear, red solution was obtained.

## EXAMPLE 5

The solution of Example 4 was cast on a glass slide and quenched in a coagulation bath of water with a few drops of sulfuric acid. The properties of the film, dried under tension at 130°C to a thickness of 0.00025 inch, are given below.

| | Machine Direction |
|---|---|
| Tensile Modulus: | 920 to 1000 kpsi |
| Tensile Strength: | 21 to 23 kpsi |
| Elongation at Break: | 4.7 to 5.0% |

## EXAMPLE 6

Preparation of Fibers

Fibers were spun from an anisotropic solution of poly(p-phenylene terephthalamide)$^-Na^+$, PPD-T$^-Na^+$, (solids content 5.4 weight percent). The temperature of the spin dope was 70° to 75°C and the size of the nozzle was 5 mil. The fibers were coagulated in water, washed with water for 24 hours and dried for several hours at room temperature. Final drying was done in an air oven at 120°C. The denier of the fibers was about 7. The fiber had a modulus of 160 g/den, tenacity of 4.6 g/den and an elongation of 4.8%.

## EXAMPLE 7

Example 6 was repeated using acetone as the coagulation bath. The fiber was dried at 120°C. The denier was about 7. The fibers had a deeper yellow color than those of Example 6. Washing with water converted the polymer anion fibers into PPTA fibers within seconds. The PPD-T$^-Na^+$ fiber had a modulus of 120 g/den, tenacity of 2.7 g/den and an elongation of 4.2%.

## EXAMPLE 8

Fibers were dry-spun from an anisotropic solution of PPD-$T^-NA^+$ (solids content 10 weight percent). The column temperature for the evaporation of the solvent was 240°C. The resultant fiber was further dried at 120°C but still contained some dimethylsulfoxide. The fiber had a modulus of 48 g/den, a tenacity of 1.2 g/den and an elongation of 4.4%.

## EXAMPLE 9

The fibers of Example 8 were immersed in water. The conversion was complete in seconds and the color of the fibers changed from orange to almost white. The fibers dried at 120°C, had a modulus of 165 g/den, a tenacity of 4.2 g/den and an elongation of 4.9%.

## EXAMPLE 10

A piece of copper wire was dipped into a solution of PPD-$T^-Na^+$, then quenched in water and dried. Examination of the copper wire showed it to be coated with a thin film of PPTA.

## EXAMPLES 11 TO 20

The formation of anisotropic phases in PPTA anion solutions was demonstrated by polarizing microscopy. Solutions with different polymer concentrations were observed to determine the critical concentration regions for the transition from the isotropic to the anisotropic phase. Solutions of PPD-$T^-Na^+$ and PPD-$T^-K^+$ were prepared as described in Examples 1 and 4. The solutions were concentrated by evaporating the solvent under vacuum. Each solution was observed by polarizing microscopy. The results are listed in Table 1.

Table 1

Microscopic Observations of PPTA Anion Solutions

| Ex. No. | Concentration of PPD-T⁻Na⁺ (Weight Percent) | Results |
|---|---|---|
| 11 | 1.5 | Isotropic, shear birefringence |
| 12 | 2.1 | Biphasic, birefringent regions |
| 13 | 2.7 | Biphasic, increased birefringence |
| 14 | 4.4 | Almost completely birefringent |
| 15 | 5.3 | Completely birefringent |
| 16 | 6.3 | Completely birefringent |
| | Concentration of PPD-T⁻K⁺ (Weight Percent) | |
| 17 | 1.7 | Isotropic |
| 18 | 6.3 | Isotropic, shear birefringence |
| 19 | 8.6 | Isotropic, shear birefringence |
| 20 | 11 to 12 | Almost completely birefringent |

The results show that the concentration of PPD-T anion needed for conversion of isotropic solutions to anisotropic solutions is dependent upon the counter cation.

## EXAMPLE 21

A PPD-T polyanion solution in which 75% of the amide bonds were deprotonated was prepared by the following procedure. A 48.8g sample of a pre-formed solution of 1.33 weight percent of fully deprotonated PPD-T was treated with 0.214g of PPD-T pulp and 14.6 mL of additional DMSO to maintain 1.3 weight percent solids. Within 18 hours, the additional fibers had dissolved to yield a clear, red, homogeneous solution of partially deprotonated PPD-T.

## EXAMPLE 22

A PPD-T polyanion solution in which 75% of the amide bonds were deprotonated was prepared using a deficiency of base. A solution of .094M dimsyl anion as the potassium salt was prepared by addition of 0.72 g of KH to 66.7 mL of DMSO. To this solution was added 1.00g of PPD-T pulp. Within 48 hours at room temperature, with stirring, the fibers were fully dissolved to yield a clear, red, homogeneous solution of partially deprotonated PPD-T.

## EXAMPLE 23

A PPD-T polyanion solution was prepared in which 75% of the amide bonds were deprotonated by treatment of fully deprotonated polyanion with strong acid. A 48.8 g sample of a pre-formed solution of 1.33 weight percent of fully deprotonated PPD-T polyanion in DMSO was treated with 0.080 mL of acetic acid (sufficient to protonate 25% of the amide bonds). This addition caused a large lump of solid to precipitate. Stirring the resulting mixture for 48 hours at room temperature caused the lump to dissolve completely, leaving a clear, red, homogeneous solution of partially deprotonated PPD-T.

## EXAMPLE 24

Viscosity measurements were carried out by measuring bubble rise time in calibrated "Cargille" brand viscosity tubes immersed in an oil bath maintained at 25°C. These data are summarized in Table 2 below.

## EXAMPLE 25

A solution of $K^+$ dimsyl$^-$ was prepared by addition of 2.17 g (18.9 mmol) of KH (35% in mineral oil) to 110 g of DMSO. To this was added 4.00 g of PPD-T pulp (33.6 mmol of amide bonds). Within 24 hrs. at room temperature the PPD-T pulp had completely dissolved to yield a clear, red, homogeneous solution (3.50 weight percent with no fibers detectable by examination under a microscope of aliquots of the solution. The solution was treated with an additional 12.6 mmol of KH in 10 mL DMSO followed by 1.00g PPD-T pulp. Within 12 hours at room temperature, the PPD-T pulp has dissolved to yield a free flowing, clear, red homogeneous solution of 3.97 weight percent. A second treatment with identical amounts of PPD-T and KH yielded a 4.96 weight percent solution with no detectable unreacted fibers. A final treatment with identical amounts of KH and PPD-T pulp yielded a 5.83 weight percent solution. In this case, a small amount of unreacted fiber was detectable even after a period of seven days of reaction. This solution nevertheless had a viscosity low enough to be processed into a film. A solution of fully deprotonated PPD-T at this concentration is not processible using ordinary laboratory apparatus.

TABLE 2

Dependence of Viscosity on Level of Deprotonation of 1.33 Weight Percent Solutions in DMSO by Bubble Rise Time

| Sample | Viscosity (Stokes) |
|---|---|
| Fully Deprotonated $K^+PPD\text{-}T^-$ | 50.2 ± 0.7 |
| 95% Deprotonated $K^+PPD\text{-}T^-$ | 31.7 ± 1.6 |
| 90% Deprotonated $K^+PPD\text{-}T^-$ | 27.3 ± 1.1 |
| 83% Deprotonated $K^+PPD\text{-}T^-$ | 21.5 ± 0.8 |
| 75% Deprotonated $K^+PPD\text{-}T^-$ | 17.1 ± 0.3 |

**Claims**

1. A solution in a liquid sulfoxide of an aromatic polyamide anion salt having the repeating unit:

-NHRCO-, 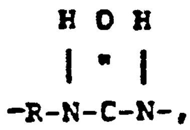, or 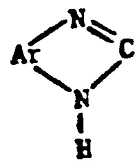

wherein:
R is selected from $R^3$ and $R^1NHCOR^2$,
$R^1$ and $R^3m$, individually, are selected from m-phenylene, p-phenylene, 3,3′-biphenylene, 3,4′-biphenylene, 4,4′-biphenylene and 4,4′-diphenylene ether,
$R^2$ is selected from $R^1$ and $-(CH_2)_x-$,
Ar is an aryltriyl radical in which two of the three radical bonds are adjacent to one another and attached to nitrogen atoms, and
x is 1 to 10;
the polyamide having a weight average molecular weight of at least 2500, the solution being isotropic or anisotropic and when isotropic the solution being a potassium salt solution.

2. A solution according to claim 1 wherein $R^3$ is p-phenylene.

3. A low salt, heat stable article of manufacture having a substantially homogeneous composition, comprising an aromatic polyamide having the repeating unit:

-NHRCO-, 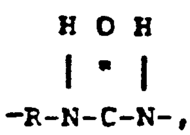, or 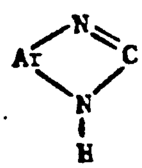

wherein the various symbols are as defined in claim 1.

4. An article according to claim 3 in the form of a film.

5. An article according to claim 3 in the form of a fiber.

6. An article according to claim 3 in the form of a coating.

7. Use of a solution as claimed in claim 1 or 2 in making an article of manufacture, which is a slow salt, heat stable article of substantially homogeneous composition.

8. A method for controlling the viscosity of a solution as claimed in claim 1 or 2 comprising varying the degree to which the polyamide is protonated by one of the following steps:

(i) controlling the viscosity of the solution by mixing deprotonated polymer with sufficient protonated polymer to achieve the desired viscosity,

(ii) lowering the viscosity of a solution comprising partially or fully deprotonated polymer, by adding thereto an acid having a higher pKa than that of the deprotonated polymer.

(iii) raising the viscosity of a solution comprising partially or fully protonated polymer by adding thereto a base whose conjugate acid has a higher pKa than that of the protonated polymer.